# EUROPÄISCHE PATENTANMELDUNG

(11) **EP 0 665 383 A1**
(43) Veröffentlichungstag der Anmeldung: **02.08.1995**
(21) Anmeldenummer: 94106724.1
(22) Anmeldetag: 29.04.1994
(51) Int. Cl.: F16C 29/04

(54) **Teleskopschiene aus Aluminium-Strangpressprofilen**

(30) Priorität: 31.01.1994 DE 9401514 U
(71) Anmelder: WERNAL D. PILLATH GmbH, D-59457 Werl (DE)
(72) Erfinder: Breiter, Udo, D-59846 Sundern (DE)
(74) Vertreter: Schirmer, Siegfried, Dipl.-Ing.

(57) **Zusammenfassung**

Das geschlossene hohle Aluminium-Außenprofil (1) weist vier innenliegende Funktionskanäle (3) und zwei gegenüberliegende Kugelführungsbahnen (7) auf, die mit den Kugelführungsbahnen (6) des Aluminium-Innenprofils (4) auf axialer Linie liegen. Die in den Kugelführungsbahnen (6; 7) verlaufenden Kugeln (2) bilden unter Zwischenschaltung von Distanzstücken eine Kugelreihe. Das Aluminium-Außenprofil (1) weist eine konkave Wölbung auf, die durch die in den Kugelführungsbahnen (6;7) geführten Kugeln (2) ausgleichbar verläuft.

Durch die erfindungsgemäße Ausbildung können gegenüber offenen Profilen größere Kräfte aufgenommen werden. Außerdem ist eine einfache Anbindung zusätzlicher Elemente, wie Deckelflanschlager und Abwinklungen, möglich. Die konkave Wölbung des Aluminium-Außenprofils und die damit erzielte Vorspannung garantiert immer eine spiegelfreie Teleskopierung.

## Beschreibung

Die Erfindung betrifft eine Teleskopschiene aus Aluminium-Strangpreßprofilen mit mindestens zwei Kugelführungsbahnen zur Aufnahme je einer Kugelreihe in den zueinanderweisenden Flächen der sich überlappenden Aluminium-Strangpreßprofilen.

Bei den bekannten Teleskopschienen finden ausschließlich offene Aluminium-Strangpreßprofile Anwendung. Abgesehen davon, daß eine Abdichtung gegen das Eindringen von Schmutzpartikeln auf der Längsfläche der Teleskopschiene nicht auszuschließen ist, ist die Anbindung zusätzlicher Elemente, wie Abwinklungen und Flansche, nicht möglich.

Der Erfindung liegt die Aufgabe zugrunde, eine Teleskopschiene der aufgezeigten Gattung so auszubilden, daß ein längsseitiges Eindringen von Schmutzpartikeln ausgeschlossen ist bei gleichzeitiger Schaffung von Möglichkeiten zur Anbindung zusätzlicher Elemente.

Erfindungsgemäß wird diese Aufgabe dadurch gelöst, daß in einem geschlossenen hohlen Aluminium-Außenprofil ein geschlossenes hohles Aluminium-Innenprofil führbar angeordnet ist, wobei das Aluminium-Außenprofil und/oder das Aluminium-Innenprofil mit längsverlaufenden offenen und/oder geschlossenen Funktionskanälen versehen sind bzw. ist. In Ausgestaltung der Erfinung weist das Aluminium-Außenprofil eine konkave Wölbung auf, die durch die in den Kugelführungsbahnen geführten Kugeln ausgleichbar verläuft. Vorteilhafterweise ist der Abstand zwischen den Kugelführungsbahnen in ihrem tiefsten Punkt kleiner als der Durchmesser der Kugeln.

Die Kugelführungsbahnen können eine von der Oberfläche der Kugeln abweichende Formgebung aufweisen, so daß die Kugeln beim Verschieben die Kugelführungsbahnen linienförmig an zwei Stellen berühren, wobei die Berührungsbahnen der Kugeln in den Kugelführungsbahnen permanent verlaufen. Bei einem bevorzugten Ausführungsbeispiel der Erfindung bilden die in einer Kugelführungsbahn verlaufenden Kugeln unter Zwischenfügung von Distanzstücken eine Kugelreihe. Vorteilhafterweise sind die Distanzstücke durch Kunststoffstäbe gebildet, deren Durchmesser kleiner ist als der Durchmesser der Kugeln.

Zur Festlegung der Länge der Kugelführungsbahnen und damit zur Festlegung der Länge des Fahrweges der Kugelreihen können in jeder Kugelführungsbahn im Abstand zueinander zwei Anschlagstifte angeordnet sein, die fest im Innenprofil gelagert sind. Vorteilhafterweise ist im Hohlraum des Innenprofils eine Kammer für die Führung einer Spindel angeordnet.

Besonders günstige Werte bezüglich der Abriebfestigkeit lassen sich erfindungsgemäß dadurch erzielen, daß den Kugeln Kugelkäfige zugeordnet sind, die mindestens vier in Verschieberichtung verlaufende Stäbe aufweisen, wobei diese Stäbe gegenüber Aluminium eine wesentlich höhere Abriebfestigkeit besitzen. Vorteilhafterweise bestehen die Stäbe des Kugelkäfigs aus Stahl oder Kunststoff und sind in einprofilierte Aufnahmen des Aluminium-Außenprofils und des Aluminium-Innenprofils geführt. Auf der den Kugeln zugewandten Seite sind die Aufnahmen offen, so daß an diesen Stellen die Kugeln an den in den Aufnahmen befindlichen Stäben des Kugelkäfigs führbar sind. Die Stäbe des Kugelkäfigs werden vorteilhafterweise von der Stirnseite aus in die Aufnahmen eingeschoben und in Funktionsstellung gegen Längsbewegung gesichert.

Durch die Verwendung von geschlossenen Aluminium-Strangpreßprofilen ergeben sich gegenüber offenen Profilen andere statische Verhältnisse, wodurch größere Kräfte aufgenommen werden können. Durch die Anordnung von offenen oder geschlossenen Kanälen ist eine einfache Anbindung zusätzlicher Elemente, wie Deckelflanschlager und Abwinklungen, möglich. Die konkave Wölbung des Aluminium-Außenprofils und die damit erzielte Vorspannung garantiert immer eine spielfreie Teleskopierung. Bei Verwendung eines aus geeignetem Kunststoff gebildeten Distanzstücks ist eine Selbstschmierung der Kugeln gegeben. Die Kombination der Aluminium-Strangpreßprofile mit eingesetzten Kugeln, Distanzstücken und Endanschlägen kann sowohl in eine vorhandene Rohrkonstruktion, z. B. in ein Schreibtischuntergestell als verdeckte Konstruktion, als auch direkt als sichtbares Funktionsteil eingesetzt werden.

Durch die Anordnung der Kugelkäfige wird mit den eingelegten hochverschleißfesten Stäben die Abriebfestigkeit erhöht und damit die Verschleißbarkeit des Materials gegen null reduziert. Damit ist eine wartungsfreie Kugelführung garantiert.

Ausführungsbeispiele der Erfindung sind in den Zeichnungen dargestellt und werden nachfolgend näher beschrieben. Es zeigen:
- Fig. 1: einen Querschnitt durch ein Teleskoprohr,

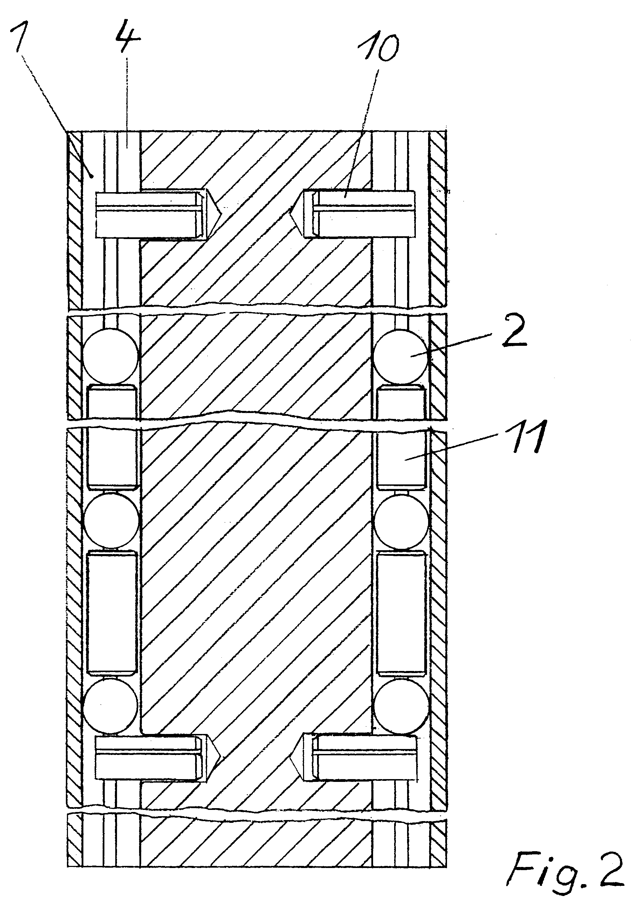

- Fig. 2: einen Längsschnitt durch ein Teleskoprohr im Bereich der Kugelführungsbahnen und
- Fig. 3: einen Querschnitt durch ein Teleskoprohr mit angeordneten Kugelkäfigen.

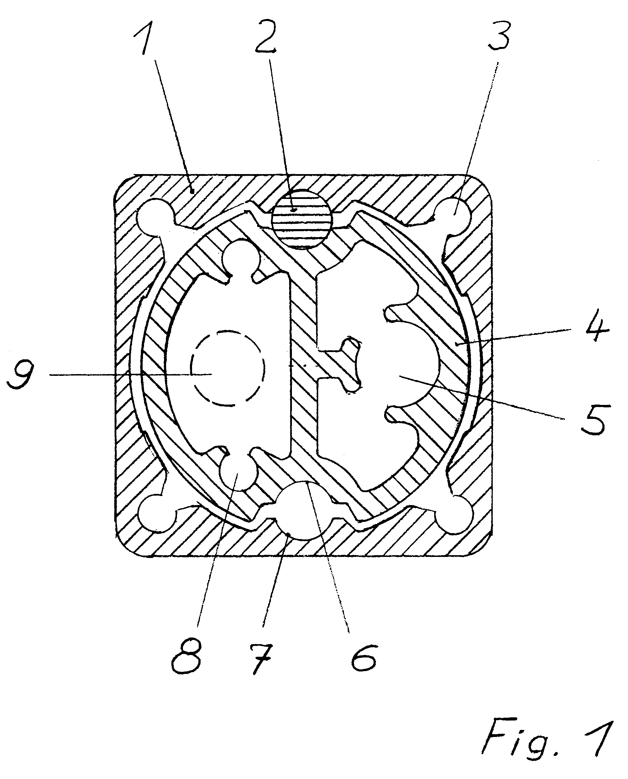

Das geschlossene Aluminium-Außenprofil 1 besitzt vier innenliegende Funktionskanäle 3. Ebenso ist es aber möglich, diese Funktionskanäle 3 auf der Außenseite anzuordnen, und zwar in offener oder geschlossener Gestaltung. Auf der Innenwandung des Außenprofils 1 sind auf zwei gegenüberliegenden Seiten je eine Kugelführungsbahn 7 angeordnet, die mit den Kugelführungsbahnen 6 des Aluminium-Innenprofils 4 auf axialer Linie liegen. Das Innenprofil 4 ist ebenfalls geschlossen ausgebildet und weist zwei Schraubaugen 8 auf. Das Innenprofil 4 ist nach Figur 1 mit einem Funktionskanal 5 und einer Kammer 9 zur Aufnahme einer Spindel versehen. Der Antrieb für die teleskopartige Höhenverstellung kann auch über Getriebe, Zahnriemen u. a. oder pneumatisch bzw. hydraulisch über innenliegende Zylinder oder über elektronische Stellmotoren erfolgen.

Die in einer Kugelführungsbahn 6; 7 verlaufenden Kugeln 2 bilden unter Zwischenschaltung von Distanzstücken 11 eine Kugelreihe. Die Distanzstücke 11 sind hierbei durch Kunststoffstäbe gebildet, deren Durchmesser kleiner ist als der Durchmesser der Kugeln. Zur Begrenzung des Verfahrwegs der Kugelreihen sind in jeder Kugelführungsbahn 6; 7 im Abstand zueinander zwei Anschlagstifte 10 angeordnet, die fest im Innenprofil 4 gelagert sind.

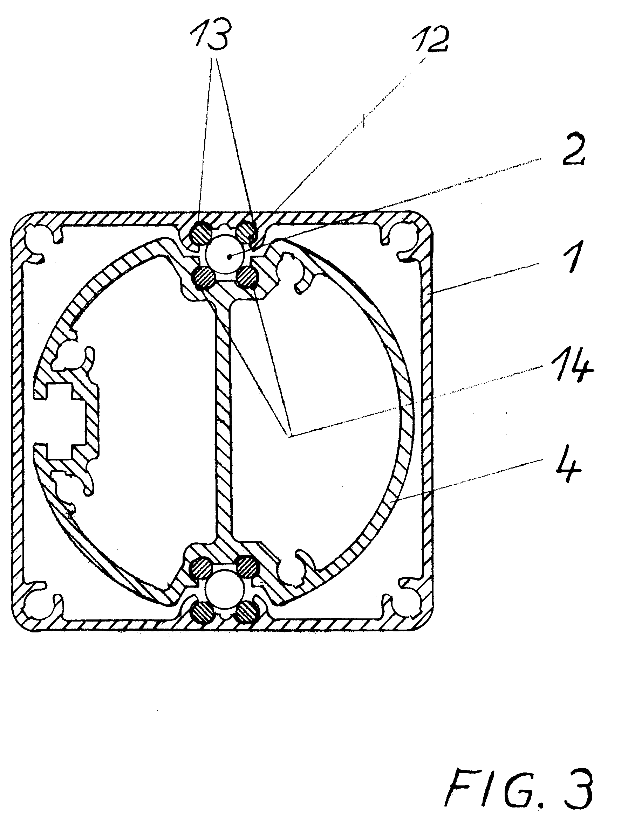

Wie aus Figur 3 erkennbar, sind die Kugeln 2 in einem Kugelkäfig 12 geführt, der vier in Verschieberichtung verlaufende Stäbe aufweist, die gegenüber Aluminium eine wesentlich höhere Abriebfestigkeit besitzen. Die Stäbe des Kugelkäfigs 12 sind in einprofilierten Aufnahmen 13, 14 des Aluminium-Außenprofils 1 und des Aluminium-Innenprofils 4 von der Stirnseite aus eingeschoben und in Funktionsstellung gegen Längsbewegung in den Aufnahmen 13, 14 gesichert. Auf der den Kugeln 2 zugewandten Seite ragen die Stäbe aus den Aufnahmen 13, 14 heraus, so daß an diesen Stellen eine Berührung zwischen Kugeln 2 und den Stäben des Kugelkäfigs 12 gegeben ist. Die Bildung einer Kugelreihe erfolgt unter Zwischenschaltung von Distanzstücken.

### Aufstellung der Bezugszeichen:

- 1: Aluminium-Außenprofil
- 2: Kugeln
- 3: Funktionskanal in 1
- 4: Aluminium-Innenprofil
- 5: Funktionskanal in 4
- 6: Kugelführungsbahn in 4
- 7: Kugelführungsbahn in 1
- 8: Schraubauge (Innenprofil)
- 9: Kammer für Spindel
- 10: Anschlagstifte
- 11: Distanzstücke
- 12: Kugelkäfig
- 13: Aufnahmen in 1
- 14: Aufnahmen in 4

## Patentansprüche

1. Teleskopschiene aus Aluminium-Strangpreßprofilen mit mindestens zwei Kugelführungsbahnen zur Aufnahme je einer Kugelreihe in den zueinanderweisenden Flächen der sich überlappenden Aluminium-Strangpreßprofilen, dadurch gekennzeichnet, daß in einem geschlossenen hohlen Aluminium-Außenprofil (1) ein geschlossenes hohles Aluminium-Innenprofil (4) führbar angeordnet ist.

2. Teleskopschiene nach Anspruch 1, dadurch gekennzeichnet, daß das Aluminium-Außenprofil (1) und/oder das Aluminium-Innenprofil (4) mit längsverlaufenden offenen und/oder geschlossenen Funktionskanälen (3; 5; 8) versehen sind bzw. ist.

3. Teleskopschiene nach Anspruch 1 oder 2, dadurch gekennzeichnet, daß das Aluminium-Außenprofil (1) eine konkave Wölbung aufweist.

4. Teleskopschiene nach einem der Ansprüche 1 bis 3, dadurch gekennzeichnet, daß die konkave Wölbung der Aluminium-Außenprofile (1) durch die in den Kugelführungsbahnen (6; 7) geführten Kugeln (2) ausgleichbar verläuft.

5. Teleskopschiene nach einem der Ansprüche 1 bis 4, dadurch gekennzeichnet, daß der Abstand zwischen den Kugelführungsbahnen (6; 7) im tiefsten Punkt kleiner als der Durchmesser der Kugeln (2) ist.

6. Teleskopschiene nach einem der Ansprüche 1 bis 5, dadurch gekennzeichnet, daß die Kugelführungsbahnen (6; 7) eine von der Oberfläche der Kugeln (2) abweichende Formgebung aufweisen, so daß die Kugeln (2) beim Verschieben die Kugelführungsbahnen (6; 7) linienförmig an zwei Stellen berühren.

7. Teleskopschiene nach Anspruch 6, dadurch gekennzeichnet, daß die Berührungsbahnen der Kugeln (2) in den Kugelführungsbahnen (6; 7) permanent verlaufen.

8. Teleskopschiene nach einem der Ansprüche 1 bis 7, dadurch gekennzeichnet, daß die in einer Kugelführungsbahn (6; 7) verlaufenden Kugeln (2) unter Zwischenfügung von Distanzstücken (11) eine Kugelreihe bilden.

9. Teleskopschiene nach Anspruch 8, dadurch gekennzeichnet, daß die Distanzstücke (11) durch Kunststoffstäbe gebildet sind, deren Durchmesser kleiner ist als der Durchmesser der Kugeln (2).

10. Teleskopschiene nach einem der Ansprüche 1 bis 9, dadurch gekennzeichnet, daß in jeder Kugelführungsbahn (6; 7) im Abstand zueinander zwei Anschlagstifte (10) angeordnet sind.

11. Teleskopschiene nach Anspruch 10, dadurch gekennzeichnet, daß die Anschlagstifte (10) fest im Aluminium-Innenprofil (4) gelagert sind.

12. Teleskopschiene nach Anspruch 10 oder 11, dadurch gekennzeichnet, daß durch den Abstand der Anschlagstifte (10) die Länge des Verfahrwegs der Kugelreihen bestimmt ist.

13. Teleskopschiene nach einem der Ansprüche 1 bis 12, gekennzeichnet durch die Anordnung einer Kammer (9) im Hohlraum des Aluminium-Innenprofils (4) für die Führung einer Spindel.

14. Teleskopschiene nach einem der Ansprüche 1 bis 13, dadurch gekennzeichnet, daß den Kugeln (2) Kugelkäfige (12) zugeordnet sind.

15. Teleskopschiene nach Anspruch 14, dadurch gekennzeichnet, daß der Kugelkäfig (12) mindestens vier in Verschieberichtung verlaufende Stäbe aufweist.

16. Teleskopschiene nach Anspruch 14 oder 15, dadurch gekennzeichnet, daß die Stäbe des Kugelkäfigs (12) gegenüber Aluminium eine wesentlich höhere Abriebfestigkeit aufweist.

17. Teleskopschiene nach Anspruch 16, dadurch gekennzeichnet, daß die Stäbe des Kugelkäfigs (12) aus Stahl oder Kunststoff gebildet sind.

18. Teleskopschiene nach einem der Ansprüche 14 bis 17, dadurch gekennzeichnet, daß die Stäbe des Kugelkäfigs (12) in einprofilierten Aufnahmen (13, 14) des Aluminium-Außenprofils (1) und des Aluminium-Innenprofils (4) geführt sind.

19. Teleskopschiene nach einem der Ansprüche 14 bis 18, dadurch gekennzeichnet, daß die Stäbe des Kugelkäfigs (12) auf der den Kugeln (2) zugewandten Seite aus den Aufnahmen (13, 14) herausragen und mit den Kugeln (2) in Berührung stehen.

20. Teleskopschiene nach einem der Ansprüche 14 bis 19, dadurch gekennzeichnet, daß die Stäbe des Kugelkäfigs (12) in Funktionsstellung gegen Längsbewegung in den Aufnahmen (13, 14) gesichert sind.
